# EUROPEAN PATENT APPLICATION

(11) **EP 4 768 226 A1**
(43) Date of publication of application: **01.07.2026**
(21) Application number: 25212442.5
(22) Date of filing: 30.10.2025
(51) Int. Cl.: B29C 49/58, B29C 49/42

(54) **BLOW MOLDING MECHANISM AND MOLD UNIT**

(30) Priority: 27.12.2024 JP 2024231665
(71) Applicant: Sumitomo Heavy Industries, Ltd., Tokyo 141-6025 (JP)
(72) Inventor: SATO, Takayuki, Chiba, 263-0001 (JP); TANI, Ryosuke, Chiba, 263-0001 (JP); TAKAHASHI, Rei, Chiba, 263-0001 (JP)
(74) Representative: Louis Pöhlau Lohrentz

(57) **Abstract**

A blow molding mechanism (1) includes a second split mold (13) that includes a first region (131) which accommodates at least a part of a portion on an opening portion (205) side from a boundary line (L) between a portion of a bottomed cylindrical intermediate molded product (200) including the opening portion (205), which becomes a neck portion (331) of a final molded product (300), and a portion which becomes the shoulder portion (332), and a second region (132) which accommodates a portion on a side opposite to the opening portion (205) side from the boundary line (L) and an air output portion (11) that outputs air from an output port (112) of a tip portion of a long shaft pipe (111) inserted from the opening portion (205) into the intermediate molded product (200) to expand the intermediate molded product (200), in which the output port (112) is disposed on a first region (131) side of the boundary line (L) between the first region (131) and the second region (132).

## Description

### BACKGROUND OF THE INVENTION

### Field of the Invention

The present invention relates to a blow molding mechanism and a mold unit.

### Description of Related Art

Injection blow molding in which injection molding and blow molding are combined is known. In the injection molding of the injection blow molding, first, a bottomed cylindrical intermediate molded product including an opening portion is molded. Next, in the blow molding, high-pressure air is blown into the intermediate molded product to extend the intermediate molded product, so that a final molded product such as a bottle container is molded (for example, Japanese Patent No. 4425750). In the blow molding, the intermediate molded product is expanded by outputting high-pressure air from a tip portion of a long shaft pipe in a state of being inserted into the intermediate molded product from the opening portion, and thus a shape of a mold is transferred.

### SUMMARY OF THE INVENTION

However, depending on a position of the tip portion of the long shaft pipe inserted into the intermediate molded product in order to perform the blow molding with respect to the mold, air output from the tip portion does not sufficiently hit the intermediate molded product, the expansion of the intermediate molded product is insufficient, and a transfer defect of the mold occurs in some cases.

An object of the present invention is to suppress occurrence of a transfer defect caused by insufficient expansion of an intermediate molded product during blow molding.

According to an aspect of the present invention, in order to achieve such an object, there is provided a blow molding mechanism including a mold that includes a first region which accommodates at least part of a portion on an opening portion side from a boundary between a portion of a bottomed cylindrical intermediate molded product including an opening portion, which becomes a neck portion of a final molded product, and a portion which becomes a shoulder portion, and a second region which accommodates a portion on a side opposite to the opening portion side from the boundary, and an air output portion that outputs air from a tip portion of a long shaft pipe inserted from the opening portion into the intermediate molded product to expand the intermediate molded product, in which the tip portion of the long shaft pipe is disposed on a first region side of the boundary.

Herein, the tip portion of the long shaft pipe may be disposed further on the opening portion side of the first region.

In addition, the second region may allow expansion of the intermediate molded product, and the first region may not allow the expansion of the intermediate molded product.

In addition, the intermediate molded product may be a parison to be subjected to blow molding, to obtain, as a final molded product, a bottle container in which the opening portion serves as a mouth portion, and a portion of the intermediate molded product that expands in the second region may be molded into the shoulder portion, a body portion, and a bottom portion of the bottle container.

In addition, according to another aspect of the present invention, in order to achieve such an object, there is provided a mold unit including a blow molding mechanism, in which the blow molding mechanism includes a mold that includes a first region which accommodates at least part of a portion on an opening portion side from a boundary between a portion of a bottomed cylindrical intermediate molded product including one opening portion, which becomes a neck portion of a final molded product, and a portion which becomes a shoulder portion, and a second region which accommodates a portion on a side opposite to the opening portion side from the boundary, and an air output portion that outputs air from a tip portion of a long shaft pipe inserted from the opening portion into the intermediate molded product to expand the intermediate molded product, and the tip portion of the long shaft pipe is disposed on a first region side of the boundary.

According to the present invention, occurrence of a transfer defect caused by insufficient expansion of the intermediate molded product during the blow molding can be suppressed.

### BRIEF DESCRIPTION OF THE DRAWINGS

FIG. 1 is a sectional view showing an example of a configuration of a blow molding mechanism according to the present embodiment.
FIG. 2 is a sectional view showing an example of a configuration of the blow molding mechanism according to the present embodiment.
FIG. 3 is a sectional view showing an example of a configuration of a blow molding mechanism of the related art.
FIG. 4 is a sectional view showing an example of the configuration of the blow molding mechanism of the related art.

### DETAILED DESCRIPTION OF THE INVENTION

Hereinafter, an embodiment of the present invention will be described in detail with reference to the accompanying drawings.

### <Configuration of Blow Molding Mechanism 1>

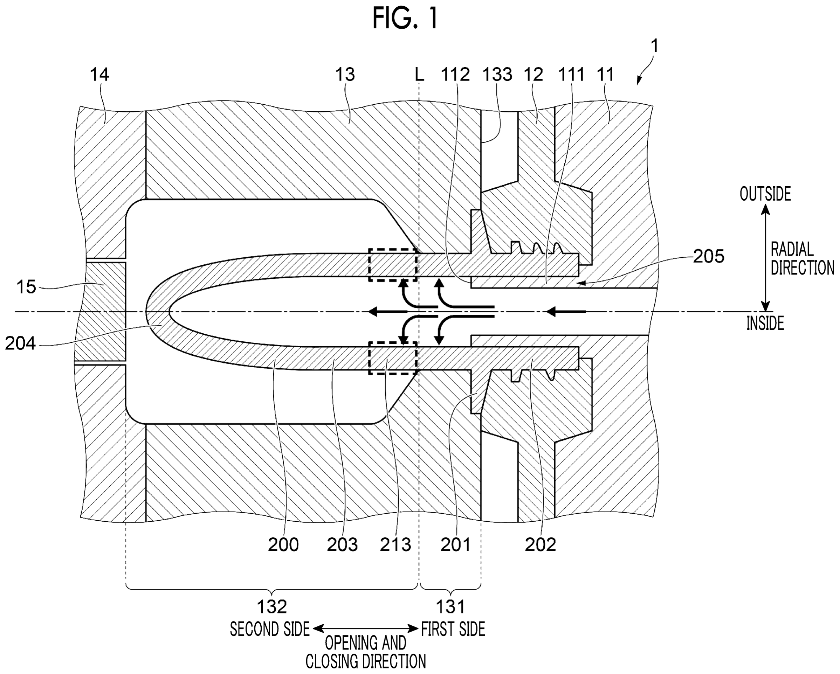

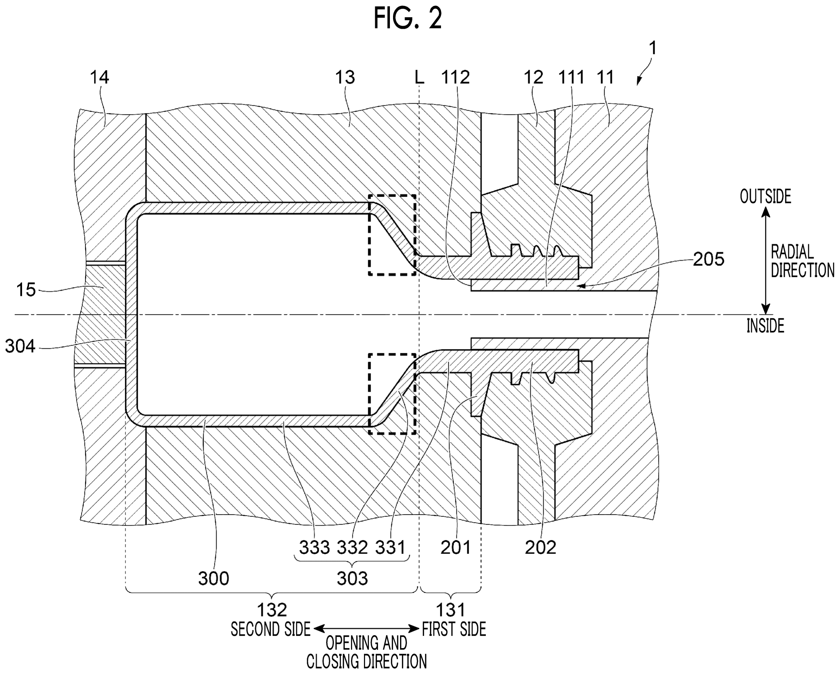

FIGS. 1 and 2 are sectional views showing an example of a configuration of a blow molding mechanism 1 according to the present embodiment.

FIGS. 1 and 2 are sectional views when the blow molding mechanism 1 is viewed from an upper side toward a lower side in an up-down direction. For this reason, a front side of the drawing of FIG. 1 is the upper side in the up-down direction, and a rear side of the drawing is the lower side in the up-down direction. In addition, FIG. 1 shows the blow molding mechanism 1 when blow molding is performed, and FIG. 2 shows the blow molding mechanism 1 immediately after the blow molding is performed.

The blow molding mechanism 1 shown in FIGS. 1 and 2 is a mechanism applied to a mold unit that molds a final molded product 300 from an intermediate molded product 200 through injection blow molding that combines injection molding and blow molding. For example, the final molded product 300 is a bottle container such as a PET bottle. The mold unit to which the blow molding mechanism 1 is applied includes a stationary mold, a movable mold, and an intermediate mold disposed between the stationary mold and the movable mold. Each of the stationary mold, the movable mold, and the intermediate mold is combined with a mold for performing molding and various types of devices that operate in conjunction with the mold.

In the injection blow molding, the injection molding is performed in a state where the stationary mold and the intermediate mold are closed, thereby molding the bottomed cylindrical intermediate molded product 200 including an opening portion 205. In addition, in the injection blow molding, the final molded product 300 is molded by performing blow molding on the intermediate molded product 200 in a state where the movable mold and the intermediate mold are closed. In the injection blow molding, the intermediate mold alternately performs injection molding and blow molding while moving between a position facing the stationary mold and a position facing the movable mold.

The blow molding mechanism 1 includes an air output portion 11 that outputs air into the intermediate molded product 200 during blow molding, and a first split mold 12, a second split mold 13, a first bottom mold 14, and a second bottom mold 15 that function as a mold during blow molding. The air output portion 11 and the first split mold 12 in the blow molding mechanism 1 constitute a part of the intermediate mold, and the second split mold 13, the first bottom mold 14, and the second bottom mold 15 constitute a part of the movable mold.

Hereinafter, in the mold unit to which the blow molding mechanism 1 is applied, a direction in which the stationary mold and the intermediate mold are opened and closed as a whole, and a direction in which the movable mold and the intermediate mold are opened and closed as a whole (an axial direction of the intermediate molded product 200 during blow molding) will be called an "opening and closing direction". Further, an opening portion 205 side of the intermediate molded product 200 in the opening and closing direction will be called a "first side", and a bottom portion 204 side of the intermediate molded product 200 in the opening and closing direction will be called a "second side". In addition, a direction perpendicular to the axial direction (opening and closing direction) of the intermediate molded product 200 during blow molding will be called a "radial direction". Further, a center axis (one-dot chain line) side of the intermediate molded product 200 in the radial direction will be called an "inside", and an opposite side thereto will be called an "outside".

The air output portion 11 includes a hollow long shaft pipe 111 that outputs high-pressure air from an output port 112 of a tip portion. The air output portion 11 expands the intermediate molded product 200 by outputting the high-pressure air from the output port 112 of the long shaft pipe 111 in a state of being inserted into the intermediate molded product 200 from the opening portion 205. Before the high-pressure air is output from the output port 112, an extension rod (not shown) for extending the intermediate molded product 200 protrudes from the output port 112 to the second side in the opening and closing direction and extends inside the intermediate molded product 200 to extend the intermediate molded product 200 to the second side in the opening and closing direction.

FIG. 1 shows the intermediate molded product 200 when high-pressure air is output from the output port 112. In addition, FIG. 2 shows the final molded product 300 molded by expansion of the intermediate molded product 200 of FIG. 1 caused by the output of the high-pressure air from the output port 112.

Herein, each part of the intermediate molded product 200 and the final molded product 300 will be described. As shown in FIG. 1, the intermediate molded product 200 includes a fringe portion 201 which is a portion protruding most outward in the radial direction and a mouth portion 202 which is a portion on the first side of the fringe portion 201 in the opening and closing direction. In addition, the intermediate molded product 200 includes a main body 203 and a bottom portion 204 which are portions on the second side of the fringe portion 201 in the opening and closing direction.

In addition, as shown in FIG. 2, the final molded product 300 includes the fringe portion 201, the mouth portion 202, and a main body 303 and a bottom portion 304 which are portions on the second side of the fringe portion 201 in the opening and closing direction. The main body 303 is a portion where the main body 203 of the intermediate molded product 200 is blow-molded. The main body 303 includes a neck portion 331, a shoulder portion 332, and a body portion 333. Among these, the shoulder portion 332 is a portion where a portion 213 of the intermediate molded product 200, which becomes the shoulder portion 332 (a portion surrounded by a broken line in FIG. 1) of the final molded product 300, is blow-molded. The bottom portion 304 is a portion where the bottom portion 204 of the intermediate molded product 200 is blow-molded.

The first split mold 12 is a separable split mold called a split or a mouth split mold and grips the mouth portion 202 of the intermediate molded product 200 and the final molded product 300 in a closed state. FIGS. 1 and 2 show the first split mold 12 in a closed state. When the final molded product 300 is molded by blow molding, the first split mold 12 is opened from the inside to the outside in the radial direction with respect to the final molded product 300. Accordingly, the mouth portion 202 of the final molded product 300 is released from the first split mold 12.

The second split mold 13 is a separable split mold also called a blow split mold, functions as one of the molds for blow molding, and molds the main body 303 of the final molded product 300 from the main body 203 of the intermediate molded product 200 in a closed state during blow molding. FIG. 1 shows the second split mold 13 in a closed state. When the final molded product 300 is completed by blow molding, the second split mold 13 is opened from the inside to the outside in the radial direction with respect to the final molded product 300. Accordingly, the main body 303 of the final molded product 300 and the fringe portion 201 are released from the second split mold 13.

The first bottom mold 14 and the second bottom mold 15 function as one of the molds for blow molding and mold the bottom portion 304 of the final molded product 300 from the bottom portion 204 of the intermediate molded product 200 during blow molding. Among these, the second bottom mold 15 functions as a part of an ejector mechanism that separates the final molded product 300 from itself and the first bottom mold 14 by protruding from the second side to the first side in the opening and closing direction after the blow molding.

### <Position of Output Port 112>

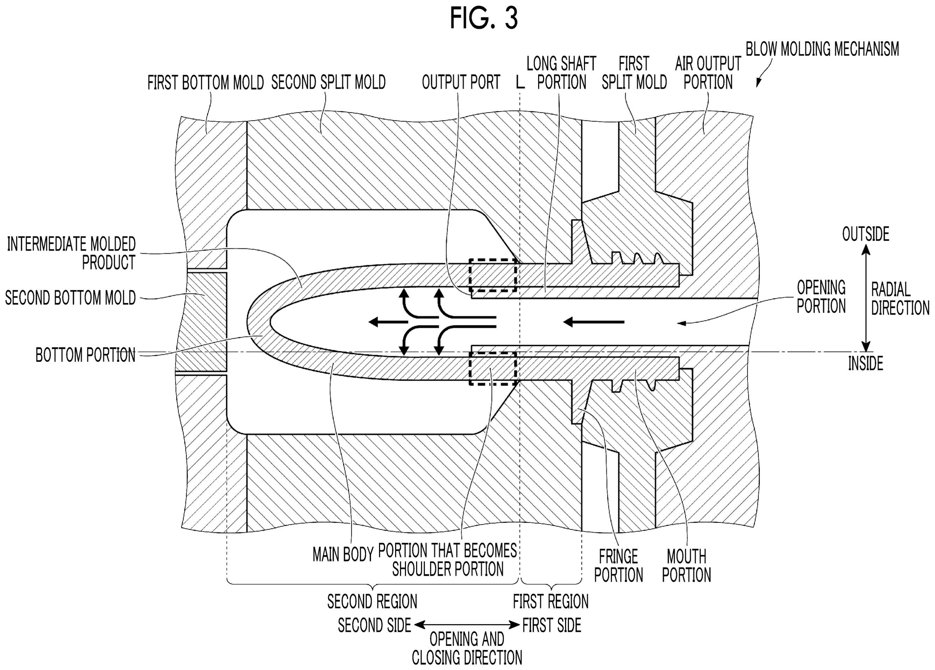

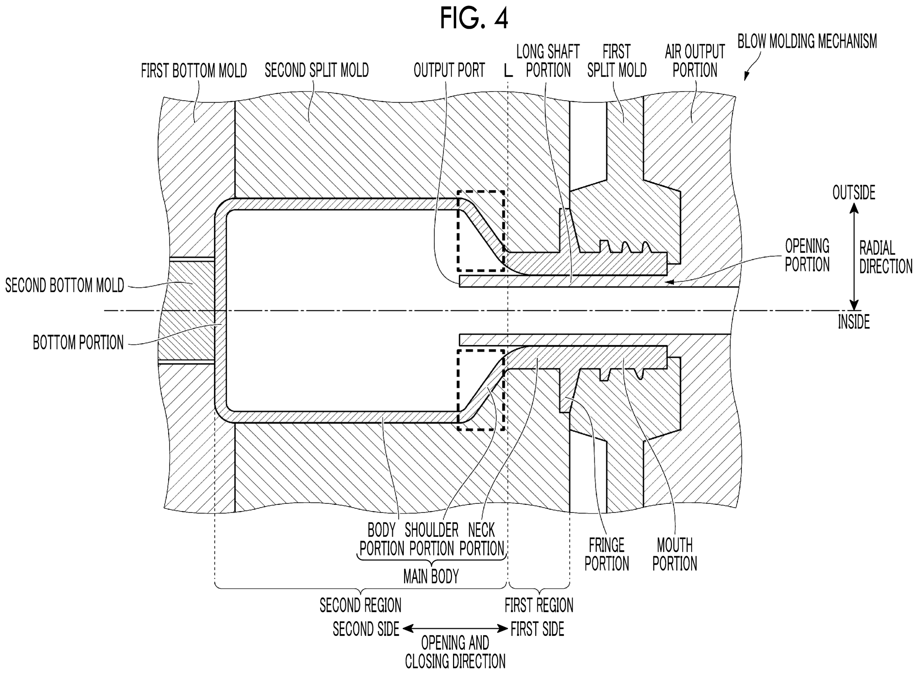

The blow molding mechanism 1 according to the present embodiment is characterized in a position of the output port 112 of the long shaft pipe 111 of the air output portion 11 that outputs high-pressure air during blow molding in the opening and closing direction. Hereinafter, the characteristics of the position of the output port 112 in the opening and closing direction with respect to the second split mold 13, and effects thereof will be described with reference to FIGS. 3 and 4, which are examples of a configuration of the blow molding mechanism of the related art.

FIGS. 3 and 4 are sectional views showing an example of the configuration of the blow molding mechanism of the related art.

FIGS. 3 and 4 are sectional views when the blow molding mechanism of the related art is viewed from the upper side toward the lower side in the up-down direction. For this reason, a front side of the drawing of FIG. 3 is the upper side in the up-down direction, and a rear side of the drawing is the lower side in the up-down direction. In addition, FIG. 3 shows the blow molding mechanism of the related art when blow molding is performed, and FIG. 4 shows the blow molding mechanism of the related art immediately after blow molding is performed.

The configuration of the blow molding mechanism of the related art shown in FIGS. 3 and 4 is basically the same as the configuration of the blow molding mechanism 1 according to the present embodiment shown in FIGS. 1 and 2 described above. However, a position of the output port of the long shaft pipe of the air output portion of the blow molding mechanism of the related art in the opening and closing direction and a position of the output port 112 of the long shaft pipe 111 of the air output portion 11 of the blow molding mechanism 1 according to the present embodiment in the opening and closing direction are different from each other. Specifically, a position of the output port of the long shaft pipe in the opening and closing direction with respect to the second split mold of the blow molding mechanism of the related art and a position of the output port 112 of the long shaft pipe 111 in the opening and closing direction with respect to the second split mold 13 of the blow molding mechanism 1 according to the present embodiment are different from each other.

As shown in FIGS. 1 and 2, the second split mold 13 according to the present embodiment includes a first region 131 that does not allow expansion of the intermediate molded product 200 and a second region 132 that allows the expansion when high-pressure air for blow molding the intermediate molded product 200 is output from the output port 112. Similarly, the second split mold of the related art also includes the first region and the second region (see FIGS. 3 and 4).

Herein, as shown in FIGS. 1 and 2, the long shaft pipe 111 of the air output portion 11 according to the present embodiment is configured such that the output port 112 is disposed on a first region 131 side (the first side in the opening and closing direction) of an imaginary boundary line L between the first region 131 and the second region 132. Specifically, the output port 112 is disposed in the vicinity of the first side of the boundary line L in the opening and closing direction and the second side in the opening and closing direction with respect to an end portion 133 of the second split mold 13 on the first side in the opening and closing direction. On the other hand, as shown in FIGS. 3 and 4, the long shaft pipe of the air output portion of the blow molding mechanism of the related art is configured such that the output port is disposed on a second region side (the second side in the opening and closing direction) of the boundary line L between the first region and the second region.

Due to such a difference in configuration, for example, there is a difference in the accuracy of transfer of a portion where a transfer defect in the shape of the mold is likely to occur, such as the shoulder portion 332 of the final molded product 300 shown in FIG. 2. The shoulder portion 332 of the final molded product 300 is a portion of the main body 303 of the final molded product 300, which is surrounded by a broken line that is transferred in a shape in the vicinity of the second side of the boundary line L in the opening and closing direction, that is, a portion where the diameter of a cavity inside the second split mold 13 in the opening and closing direction changes.

As shown in FIG. 3, the blow molding mechanism of the related art expands the intermediate molded product as high-pressure air output from the output port of the long shaft pipe of the air output portion flows in a direction of an arrow. Accordingly, the final molded product shown in FIG. 4 is molded. However, in the blow molding mechanism of the related art, the output port of the long shaft pipe of the air output portion is disposed on a second region side (the second side in the opening and closing direction) of the boundary line L. Accordingly, the air does not sufficiently hit a portion that becomes the shoulder portion of the final molded product of the intermediate molded product (a portion surrounded by a broken line in FIG. 3).

That is, a portion of the intermediate molded product blow-molded by the blow molding mechanism of the related art, which becomes the shoulder portion of the final molded product, is disposed on an upstream side of the output port in a flow direction of air flowing inside the long shaft pipe. For this reason, high-pressure air output from the output port flows in a direction against the flow direction of air flowing inside the long shaft pipe so as to hit the portion of the intermediate molded product, which becomes the shoulder portion of the final molded product. In this case, a wind pressure of air that hits the portion of the intermediate molded product, which becomes the shoulder portion of the final molded product, is smaller than a wind pressure of air that hits a portion of the intermediate molded product, which is disposed on the second side the output port in the opening and closing direction. As a result, the portion of the intermediate molded product, which becomes the shoulder portion of the final molded product, is less likely to expand, and thus a transfer defect is likely to occur.

On the other hand, in the blow molding mechanism 1 according to the present embodiment, as described above, the output port 112 of the long shaft pipe 111 of the air output portion 11 is disposed on the first region 131 side (the first side in the opening and closing direction) of the boundary line L. For this reason, air is likely to hit the portion 213 of the intermediate molded product 200, which becomes the shoulder portion 332 of the final molded product 300 among the intermediate molded product 200.

That is, the portion 213 of the intermediate molded product 200 blow-molded by the blow molding mechanism 1 according to the present embodiment, which becomes the shoulder portion 332 of the final molded product 300, is disposed on a downstream side of the output port 112 in the flow direction of air flowing inside the long shaft pipe 111. For this reason, high-pressure air output from the output port 112 flows along the flow direction (a direction from the first side toward the second side in the opening and closing direction) of air flowing inside the long shaft pipe 111 so as to hit the portion 213 of the intermediate molded product 200, which becomes the shoulder portion 332 of the final molded product 300. In this case, unlike the blow molding mechanism of the related art, the wind pressure of the air that hits the portion 213 of the blow-molded intermediate molded product 200, which becomes the shoulder portion 332 of the final molded product 300, is less likely to decrease. As a result, the portion 213 is likely to be expanded, and occurrence of a transfer defect is suppressed.

### <Modification Example 1>

In the example shown in FIGS. 1 and 2 described above, the output port 112 of the long shaft pipe 111 of the air output portion 11 is disposed on the first side of the boundary line L in the opening and closing direction and in the vicinity of the second side in the opening and closing direction with respect to the end portion 133 of the second split mold 13 on the first side in the opening and closing direction, but the present invention is not limited thereto. The output port 112 of the long shaft pipe 111 of the air output portion 11 may be disposed on the first side of the boundary line L in the opening and closing direction.

For this reason, the output port 112 may be disposed on the first side of the boundary line L in the opening and closing direction and on the second side of the position of the output port 112 shown in FIGS. 1 and 2 in the opening and closing direction. Also in this case, high-pressure air output from the output port 112 is likely to flow along the flow direction of air flowing inside the long shaft pipe 111 and is likely to hit the portion 213. Therefore, the portion 213 is likely to expand, and occurrence of a transfer defect is suppressed.

### <Modification Example 2>

In addition, since air can be output in a state where the long shaft pipe 111 is inserted into the intermediate molded product 200, for example, the output port 112 may be disposed further on the first side of the first region 131 of the second split mold 13 in the opening and closing direction. That is, the long shaft pipe 111 may be configured such that the output port 112 is disposed further on the first side in the opening and closing direction with respect to the end portion 133 of the second split mold 13 on the first side in the opening and closing direction. Also in this case, high-pressure air output from the output port 112 is likely to flow along the flow direction of air flowing inside the long shaft pipe 111 and is likely to hit the portion 213. Therefore, the portion 213 is likely to expand, and occurrence of a transfer defect is suppressed.

### <Modification Example 3>

In addition, in the example described above, the first region 131 is a region that does not allow expansion of the intermediate molded product 200, but may be, without being limited thereto, a region that allows expansion of the intermediate molded product 200. Specifically, the first region 131 may be a region that allows expansion of a portion of the intermediate molded product 200, which becomes the neck portion 331 of the final molded product 300, and a portion of the intermediate molded product 200, which becomes a part of the fringe portion 201 on the second side in the opening and closing direction, when the high-pressure air is output from the output port 112, and that molds these portions.

In summary, the blow molding mechanism to which the present invention is applied need only adopt the following configuration, and various types of embodiments can be adopted.

That is, the blow molding mechanism 1 according to the present embodiment includes the second split mold 13 that are molds including the first region 131 which accommodates at least a part of the portion of the bottomed cylindrical intermediate molded product 200 including the opening portion 205, which becomes the neck portion 331 of the final molded product 300, the portion on the opening portion 205 side (the first side in the opening and closing direction) of the imaginary boundary line L indicating a boundary with the portion 213 which becomes the shoulder portion 332, and the second region 132 which accommodates the portion on the side (the second side in the opening and closing direction) opposite to the opening portion 205 side from the boundary line L, the first bottom mold 14, the second bottom mold 15, and the air output portion 11 that outputs air from the output port 112 of the tip portion of the long shaft pipe 111 inserted from the opening portion 205 into the intermediate molded product 200 to expand the intermediate molded product 200, in which the output port 112 of the tip portion of the long shaft pipe 111 is disposed on the first region 131 side of the imaginary boundary line L indicating the boundary between the first region 131 and the second region 132.

Accordingly, the output port 112 that outputs air inside the intermediate molded product 200 to expand the intermediate molded product 200 is disposed on the upstream side in the flow direction of air (the direction from the first side toward the second side in the opening and closing direction) with respect to a portion where a transfer defect in the shape of the mold is likely to occur. As a result, the air is likely to hit a portion where a transfer defect is likely to occur, and thus a portion where a transfer defect is likely to occur is likely to expand, so that occurrence of the transfer defect is suppressed.

Herein, the output port 112 of the tip portion of the long shaft pipe 111 may be disposed further on the opening portion 205 side (the first side in the opening and closing direction) of the intermediate molded product 200 with respect to the first region 131.

Accordingly, the output port 112 that outputs air inside the intermediate molded product 200 to expand the intermediate molded product 200 is disposed further on the upstream side in the flow direction of air (in a direction from the first side toward the second side in the opening and closing direction) with respect to the portion where a transfer defect in the shape of the mold is likely to occur. In this case, the length of the long shaft pipe 111 in the opening and closing direction is shorter. As a result, the production of the long shaft pipe 111 can be made more efficient while suppressing occurrence of a transfer defect by maintaining a state where air is likely to hit the portion where the transfer defect is likely to occur.

In addition, the second region 132 may allow expansion of the intermediate molded product 200, and the first region 131 may not allow the expansion of the intermediate molded product 200.

Accordingly, the position of the output port 112 in the opening and closing direction, through which air is output to expand the intermediate molded product 200, can be brought close to the second region 132 without considering the first region 131 where the air is not applied. As a result, the air is likely to hit a portion where a transfer defect is likely to occur, and thus a portion where a transfer defect is likely to occur is likely to expand, so that occurrence of the transfer defect is suppressed.

In addition, the intermediate molded product 200 is a parison to be subjected to blow molding, through which a bottle container in which the opening portion 205 is the mouth portion 202 becomes the final molded product 300, and a portion of the intermediate molded product 200 that expands in the second region 132 of the second split mold 13 is molded into the shoulder portion 332, the body portion 333, and the bottom portion 304 of the bottle container, which is the final molded product 300.

Accordingly, the output port 112 of the air output portion 11 that expands the parison by outputting air inside the parison, which is the intermediate molded product 200, is disposed on the upstream side of the second region 132 of the second split mold 13 that allows the expansion of the parison in the flow direction of air. As a result, in the intermediate molded product 200, the air is likely to hit the portion molded in the shoulder portion 332 of the bottle container, which is a portion where a transfer defect in the shape of the mold is likely to occur, and thus the portion is likely to expand, so that occurrence of the transfer defect is suppressed.

In addition, the mold unit to which the present invention is applied need only adopt the following configuration, and various types of embodiments can be adopted.

That is, the mold unit according to the present embodiment is a mold unit that the molding mechanism 1. The blow molding mechanism 1 includes the second split mold 13 that are molds including the first region 131 which accommodates at least a part of the portion of the bottomed cylindrical intermediate molded product 200 including the opening portion 205, which becomes the neck portion 331 of the final molded product 300, the portion on the opening portion 205 side (the first side in the opening and closing direction) of the imaginary boundary line L indicating a boundary with the portion 213 which becomes the shoulder portion 332, and the second region 132 which accommodates the portion on the side (the second side in the opening and closing direction) opposite to the opening portion 205 side from the boundary line L, the first bottom mold 14, the second bottom mold 15, and the air output portion 11 that outputs air from the output port 112 of the tip portion of the long shaft pipe 111 inserted from the opening portion 205 into the intermediate molded product 200 to expand the intermediate molded product 200, in which the output port 112 of the tip portion of the long shaft pipe 111 is disposed on the first region 131 side of the imaginary boundary line L indicating the boundary between the first region 131 and the second region 132.

### <Others>

Although the embodiment of the present invention has been described hereinbefore, the present invention is not limited to the embodiment described above. In addition, effects of the present invention are also not limited to those described in the embodiment described above. For example, the air output portion 11, the first split mold 12, the second split mold 13, the first bottom mold 14, and the second bottom mold 15 constituting the blow molding mechanism 1 shown in FIGS. 1 and 2 are merely examples for achieving the object of the present invention and are not particularly limited.

In addition, in the embodiment described above, the final molded product is a bottle container. However, the final molded product does not need to be a bottle container. The final molded product may be molded by injection blow molding.

Further, the final molded product does not need to be a molded product molded by injection blow molding. Since the molding of the intermediate molded product and the molding of the final molded product are performed by different molds, for example, the molded product molded by so-called two-color molding in which different resins or materials are combined and integrated with each other may be the final molded product. In addition, for example, the molded product may be the final molded product molded by so-called insert molding in which an insert product such as a metal screw and a terminal is put into a mold in advance, and a molten resin is injected around the insert product to integrally mold the insert product.

In addition, the injection blow molding described above may be a hot parison method in which blow molding is performed in a state where preheating during injection molding is maintained in the intermediate molded product. In addition, the method may be a cold parison method in which the intermediate molded product is once cooled and then reheated to perform blow molding.

### Brief Description of the Reference Symbols

- 1:: blow molding mechanism
- 11:: air output portion
- 12:: first split mold
- 13:: second split mold
- 14:: first bottom mold
- 15:: second bottom mold
- 200:: intermediate molded product
- 112:: output port
- 111:: long shaft pipe
- 131:: first region
- 132:: second region
- 133:: end portion

- 205:: opening portion
- 300:: final molded product
- 201:: fringe portion
- 202, 302:: mouth portion
- 203, 303:: main body
- 204, 304:: bottom portion
- 331:: neck portion
- 332:: shoulder portion
- 333:: body portion

## Claims

1. A blow molding mechanism (1) comprising:
a mold (13) that includes a first region (131) which accommodates at least part of a portion on an opening portion (205) side from a boundary (L) between a portion of a bottomed cylindrical intermediate molded product (200) including an opening portion (205), which becomes a neck portion (331) of a final molded product (300), and a portion which becomes a shoulder portion (332), and a second region (132) which accommodates a portion on an opposite side of the opening portion (205) side from the boundary (L); and
an air output portion (11) that outputs air from a tip portion of a long shaft pipe (111) inserted from the opening portion (205) into the intermediate molded product (200) to expand the intermediate molded product (200),
wherein the tip portion of the long shaft pipe (111) is disposed on a first region (131) side of the boundary (L).

2. The blow molding mechanism (1) according to claim 1,
wherein the tip portion of the long shaft pipe (111) is disposed further on the opening portion (205) side of the first region (131).

3. The blow molding mechanism (1) according to claim 1,
wherein the second region (132) allows expansion of the intermediate molded product (200), and the first region (131) does not allow the expansion of the intermediate molded product (200).

4. The blow molding mechanism (1) according to claim 1,
wherein the intermediate molded product (200) is a parison to be subjected to blow molding, to obtain, as the final molded product (300), a bottle container in which the opening portion (205) serves as a mouth portion (202), and a portion of the intermediate molded product (200) that expands in the second region (132) is molded into the shoulder portion (332), a body portion (333), and a bottom portion (304) of the bottle container.

5. A mold unit comprising:
a blow molding mechanism (1),
wherein the blow molding mechanism (1) includes
a mold (13) that includes a first region (131) which accommodates at least part of a portion on an opening portion (205) side from a boundary (L) between a portion of a bottomed cylindrical intermediate molded product (200) including an opening portion (205), which becomes a neck portion (331) of a final molded product (300), and a portion which becomes a shoulder portion (332), and a second region (132) which accommodates a portion on a side opposite to the opening portion (205) side from the boundary (L), and
an air output portion (11) that outputs air from a tip portion of a long shaft pipe (111) inserted from the opening portion (205) into the intermediate molded product (200) to expand the intermediate molded product (200), and
the tip portion of the long shaft pipe (111) is disposed on a first region (131) side of the boundary (L).
